# FASCICULE DE BREVET EUROPEEN

(11) **EP 2 155 428 B1**
(45) Date de publication et mention de la délivrance du brevet: **31.08.2016**
(21) Numéro de dépôt: 08805736.9
(22) Date de dépôt: 02.05.2008
(51) Int. Cl.: B23K 1/008, C01B 21/04, B23K 1/19

(54) **PROCÉDÉ AMÉLIORÉ DE BRASAGE D'ALUMINIUM À PRESSION ATMOSPHÉRIQUE**
VERBESSERTES ATMOSPHÄRENDRUCK-ALUMINIUMLÖTVERFAHREN
IMPROVED ATMOSPHERIC-PRESSURE ALUMINIUM BRAZING METHOD

(30) Priorité: 03.05.2007 FR 0754832
(43) Date de publication de la demande: 24.02.2010
(73) Titulaire: Centre Regional D'innovation Et De Transfert De Technologie Pour La Transformation Et Le Traitement Des Metaux Et Alliages (CRITT), 54000 Nancy (FR); L'Air Liquide Société Anonyme pour l'Etude et l'Exploitation des Procédés Georges Claude, 75007 Paris (FR)
(72) Inventeur: MAZET, Thierry, F-54000 Nancy (FR); JULLIARD, Franck, F-54000 Nancy (FR); RIDLOVA, Martina, F-78550 HOUDAN (FR); DULCY, Jacky, F-54042 Nancy Cedex (FR); GANTOIS, Michel, F-54042 Nancy Cedex (FR)
(74) Mandataire: Mellul-Bendelac, Sylvie Lisette
(86) Numéro de dépôt international: PCT/FR2008/050782
(87) Numéro de publication internationale: WO 2008/148986

(56) Documents cités:
- EP-A- 0 692 545
- WO-A-2005/097389
- DE-A1- 2 028 683
- DE-A1- 4 212 307
- DE-A1- 4 234 855
- US-A- 6 076 727

## Description

La présente invention est relative à un procédé de brasage d'aluminium à pression atmosphérique et sans flux.

Le brasage d'aluminium est une technique couramment employée dans l'industrie, en particulier pour la réalisation d'échangeurs de chaleur notamment destinés à l'industrie automobile, voir le document WO-A-2005/097389.

Le brasage d'aluminium consiste à assembler un support en aluminium ou en alliage d'aluminium avec un autre élément en aluminium ou en alliage d'aluminium sans aucune perte de matière, par fusion d'un alliage d'apport.

La difficulté pour réussir des assemblages satisfaisants réside dans le fait que dès que l'aluminium se trouve dans une atmosphère contenant d'infimes quantités d'oxydant, il s'oxyde et la couche d'alumine formée empêche la réalisation d'une liaison métallurgique entre les éléments à assembler. Cette couche doit donc être réduite. A cet effet, de façon classique, le brasage est conduit après application d'un flux de décapage.

Un tel procédé classiquement utilisé dans l'industrie automobile pour réaliser en grande série des radiateurs ou condenseurs en aluminium est le procédé dit « NOCOLOK ». Ce procédé est conduit à la pression atmosphérique sous atmosphère d'azote, et en utilisant un flux de décapage à base de fluoroaluminates de potassium à raison d'au moins environ 3g/m². Il est cependant souvent nécessaire d'augmenter la quantité de flux de décapage à des valeurs proches ou supérieures à 5g/m² pour obtenir un brasage satisfaisant. La consommation de flux est ajustée en fonction de la teneur en vapeur d'eau et en oxygène de l'atmosphère.

L'utilisation d'un tel flux pose des problèmes d'ordre économique, technologique et environnemental.

Des procédés ont été décrits dans lesquels du Nickel est déposé à la surface de la brasure, afin de réduire la consommation de flux utilisé lors du brasage. Cependant ces procédés ne permettent pas de s'affranchir complètement de l'utilisation d'un flux de décapage. Dans ces procédés, le dépôt de nickel est le plus souvent réalisé par voie chimique et nécessite, pour des questions environnementales, un retraitement des solutions utilisées. Les bains de traitement doivent être adaptés aux dimensions des pièces à revêtir. Les volumes de solution chimique (plusieurs m³) peuvent donc être importants quant il s'agit de revêtir une tôle plaquée de grandes dimensions ou une bobine. Le procédé est donc onéreux et grand consommateur de nickel. Il nécessite également des opérations de lavage et de séchage en plus de celle pratiquées lors du brasage.

Des techniques moins polluantes ont aussi été utilisées (dépôt P.V.D.), mais celles-ci se limitent à des pièces de petites dimensions.

Il existe donc un réel besoin en un procédé de brasage qui permette d'une part de réduire, voire de supprimer l'utilisation de flux tout en conservant une qualité d'assemblage acceptable et d'autre part de s'affranchir des problèmes liés à l'élaboration d'un revêtement de nickel par voie chimique ou physique.

De façon inattendue et surprenante, les présents inventeurs ont trouvé qu'il était possible de répondre à ces besoins en mettant en oeuvre un procédé de brasage d'aluminium à la pression atmosphérique selon la revendication 1.

Le procédé selon l'invention pourra par ailleurs adopter l'une ou plusieurs des caractéristiques techniques suivantes :
- ledit alliage d'apport obtenu par mécano-synthèse est obtenu par un mélange NiAl dilué dans une poudre d'Al-Si ou d'Al-Si-Mg déjà synthétisée ou telle que constituée d'un mélange d'Aluminium et de Silicium, ou d'un mélange d'Aluminium, de Silicium et de Magnésium, l'alliage final contenant de 0.05 à 10 % en Volume de NiAl, de 5 à 12 % de silicium et éventuellement de 0.5 à 2 % de Mg.

Des additions d'autres éléments d'alliage tels que du Cuivre, du Zinc de l'Argent, du Chrome et du Titane permettant de modifier les propriétés physico-chimiques de l'alliage d'apport ou d'en améliorer les caractéristiques mécaniques ou la tenue à la corrosion sont également envisageables.
- le fait que la température du four durant le cycle de brasage se situe dans la gamme de 420 à 620°C, et est de préférence voisine de 600°C.
- le brasage est conduit à la pression atmosphérique et sans flux de décapage.
- l'alcane inférieur est choisi dans le groupe comprenant les alcanes en C₁-C₄ pris seuls ou en mélange, de préférence le méthane et/ou le propane, de façon davantage préférée le méthane.
- l'alcane inférieur est injecté dans le four à raison de 0,01 à 10%, de préférence de 0,01 à 8% et plus préférentiellement encore de 0,01 à 2% en volume du volume total de l'atmosphère gazeuse injectée.
- le procédé est conduit sous atmosphère d'azote et le brasage est conduit en présence de 0,1 à 10g/m², de préférence de 0,1 à 5 g/m², plus préférentiellement encore de 0,1 à 3 g/m2 et de façon encore plus préférée de 0,1 à 2g/m2 d'un flux de décapage, et selon une des mises en oeuvre, ladite atmosphère est alors adjuvantée en au moins un alcane inférieur tel que précédemment.

Les présents inventeurs ont trouvé que de nouveaux alliages obtenus par mécano-synthèse peuvent être utilisés comme alliages d'apport dans un procédé de brasage d'aluminium à la pression atmosphérique sous atmosphère d'azote à basse teneur en oxygène et vapeur d'eau sans ajout de flux.

De tels alliages sont à base de Al, Si et Ni auxquels peut être ajouté du Mg et sont par exemple obtenus en broyant un mélange AlNi ou NiAl que l'on vient ensuite diluer à une poudre AlSi ou AlSiMg déjà synthétisée ou à un mélange Al-Si ou Al-Si-Mg préalablement broyé. Les taux de dilution sont avantageusement choisis entre 0.05 et 10 % Vol. de AlNi ou de NiAl, de préférence entre 0.05 et 5% et encore plus préférentiellement entre 0.05 et 3 % en volume.

La synthèse est réalisée par exemple dans un broyeur planétaire. Le broyage est caractérisé par la vitesse, le temps de broyage et le temps de repos entre les séquences de broyage.

Sans vouloir être liés par une théorie, les présents inventeurs pensent que ces alliages spécifiques, obtenus par mécano-synthèse, permettent lors de la montée en température et plus particulièrement juste avant la fusion de l'alliage d'apport de détruire la couche d'alumine Al₂O₃ par une réaction exothermique accompagnée d'une dilatation relative à la formation des composés intermétalliques entre le Nickel et l'Aluminium.

Ces alliages permettent donc de remplir une double fonction : celle d'alliage d'apport et celle de décapant.

Les présents inventeurs ont par ailleurs démontré que l'utilisation de l'atmosphère extrêmement épurée conforme à l'invention permet aussi d'améliorer la brasabilité lorsque l'alliage d'apport est un alliage de brasage conventionnel de la série des « 4000 ». Avantageusement on utilisera un alliage Al-Si dans lequel est incorporé du Mg, de préférence entre 0.4 et 1.5 %.

Lorsque l'alliage d'apport utilisé est un alliage conventionnel constitué d'Al et de Si, il est néanmoins préférable de conduire le brasage en utilisant un flux de décapage à raison de 0,1 à 10 g/m², de préférence de 0,1 à 5 g/m², plus préférentiellement encore de 0,3 à 3 g/m² et de façon encore plus préférée de 0,5 à 2 g/m².

Les présents inventeurs ont donc démontré que des alliages de brasage conventionnels chargés en magnésium (Al-Si-Mg, par exemple comportant de 5 à 12 % de Silicium et de 0 à 2 % de Magnésium) pouvaient aussi être utilisés dans un procédé de brasage d'aluminium à la pression atmosphérique sans flux si l'atmosphère du four présente une teneur en oxygène inférieure à quelques ppm, et de façon préférentielle inférieure à un ppm et que le point de rosée dans le four soit inférieur à -30°C, de préférence inférieur à -40°C et plus préférentiellement encore à - 45°C.

La teneur en magnésium de l'alliage d'apport Al-Si₍ₓ₎-Mg_{(y)}) sera choisie de préférence entre 0.2 et 2% de façon plus avantageuse entre 0.5 et 1.5%.

Les présents inventeurs ont découvert qu'il était aussi possible, sur une installation industrielle de traitement thermique de diminuer la teneur en oxygène de l'atmosphère jusqu'à des valeurs inférieures à un ppm (quelques centaines de ppb) à une température ne dépassant pas les 620 °C.

Ceci est réalisé en injectant directement dans l'atmosphère (N₂) du four de 0.01 à 10 % de préférence de 0.01 à 8 % et plus préférentiellement 0.01 et 2% en volume d'au moins un alcane inférieur.

L'injection peut être continue ou ponctuelle et est réalisée lors du cycle de brasage, de préférence lors d'une étape préalable à la phase de brasage, lors d'un maintien en température, réalisé de préférence entre 400 et 600 °C et de façon plus préférentielle entre 500 et 600 °C.

Sans vouloir être liés par une théorie, les présents inventeurs pensent que l'injection d'un alcane inférieur dans les gammes de température précédemment cité (300 - 620°C) entraine par dissociation de l'alcane une diminution de la teneur en oxygène de l'atmosphère. Celle-ci s'accompagne alors d'une remontée du point de rosée et de la teneur en CO et CO2 de l'atmosphère.

Cette réaction de dissociation se faisant préférentiellement sur les parois du four, qui vraisemblablement jouent ici le rôle de catalyseur elle conduit à la formation d'un dépôt de carbone qui ensuite, continu d'être actif même après un retour à la température ambiante.

Dans la présente invention, on désigne par alcanes inférieurs les alcanes en C₁-C₄, tels que le méthane, éthane, i-propane, propane, butane, isobutane, ter-butane. Plus particulièrement on préfèrera utiliser le méthane ou le propane, et de façon davantage préférée le méthane.

Cet ajout d'alcane inférieur permet l'abaissement de la teneur en oxygène de l'atmosphère jusqu'à des valeurs inférieures à un ppm (par exemple quelques centaines de ppb).

L'utilisation combinée d'atmosphères à bas point de rosée et faible teneur en oxygène, spécifiques à cette invention et d'alliage d'apport AlSiNi ou AlSiMgNi élaborés par mécano-synthèse tel que décrit précédemment permet de réaliser des assemblages brasés à la pression atmosphérique sans flux.

Le brasage à pression atmosphérique est conduit dans une atmosphère telle que la teneur en oxygène dans le four soit inférieure à quelques ppm et de façon préférentielle à un ppm et que le point de rosée dans le four soit inférieur à -30°C, de préférence inférieur à -40°C et plus préférentiellement encore à - 45°C.

Le brasage, est préférentiellement conduit avec une température de four qui s'échelonne de l'ambiante à 620°C, avec une atmosphère qui s'élabore soit entre 300 et 620 °C lorsque l'injection est réalisée au cours du cycle de brasage, ou à une température de 400 - 600 °C lorsque l'injection est réalisé lors d'une étape préalable.

Cette atmosphère à faible teneur en oxygène et bas point de rosée est notamment réalisée selon l'invention par l'injection dans le four d'au moins un alcane inférieur, de préférence le méthane ou le propane. Cette injection se fait selon l'un des modes de mise en oeuvre précédemment cité et de préférence lors d'un traitement préalable effectué entre 400 et 600 °C, de préférence entre 500 et 600 °C et de façon avantageuse à 600°C. L'injection peut être continue ou discontinue.

L'apport d'alcane inférieur se fait préférentiellement à raison de 0,01 à 10%, de préférence de 0,01 à 8% et plus préférentiellement encore de 0,01 à 2% en volume de l'atmosphère globale.

Comme on l'a dit précédemment, l'utilisation de l'atmosphère spécifique à la présente invention permet aussi d'améliorer la brasabilité lorsque l'alliage d'apport est un alliage de brasage conventionnel de la série des « 4000 ». Avantageusement on utilisera un alliage Al-Si dans lequel est incorporé du Mg, de préférence entre 0.4 et 1.5 %.

Lorsque l'alliage d'apport utilisé est un alliage conventionnel constitué d'Al et de Si, il est préférable de conduire le brasage en utilisant un flux de décapage à raison de 0,1 à 10 g/m², de préférence de 0,1 à 5 g/m², plus préférentiellement encore de 0,3 à 3 g/m² et de façon encore plus préférée de 0,5 à 2 g/m².

Dans la présente invention, on entend par flux de décapage la notion traditionnelle d'un agent capable d'éliminer la couche d'alumine présente à la surface des pièces à assembler à des températures inférieures à la température de fusion de l'alliage d'apport. Ce flux peut être choisi parmi les flux connus à base de fluorure de potassium, de césium et de lithium.

Cet ajout de flux n'est pas recommandé lorsque l'alliage d'apport utilisé contient du Magnésium. Il diminue la brasabilité voire rend le brasage impossible

Il est aussi possible pour les alliages d'apport Al-Si d'ajouter à la surface de l'alliage une couche de nickel de quelques microns d'épaisseur. Ceci peut être réalisé, soit par dépôt électrolytique, soit par pulvérisation cathodique (P.V.D.) ou par tout autre moyen pour revêtir une pièce métallique.

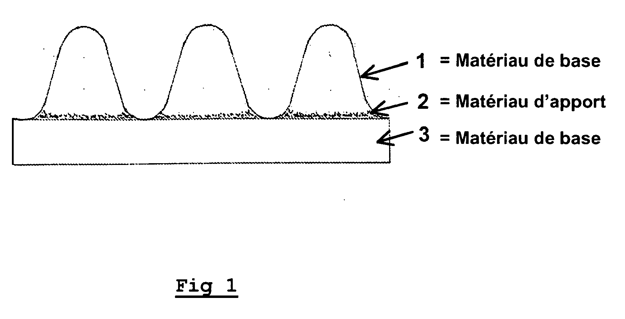

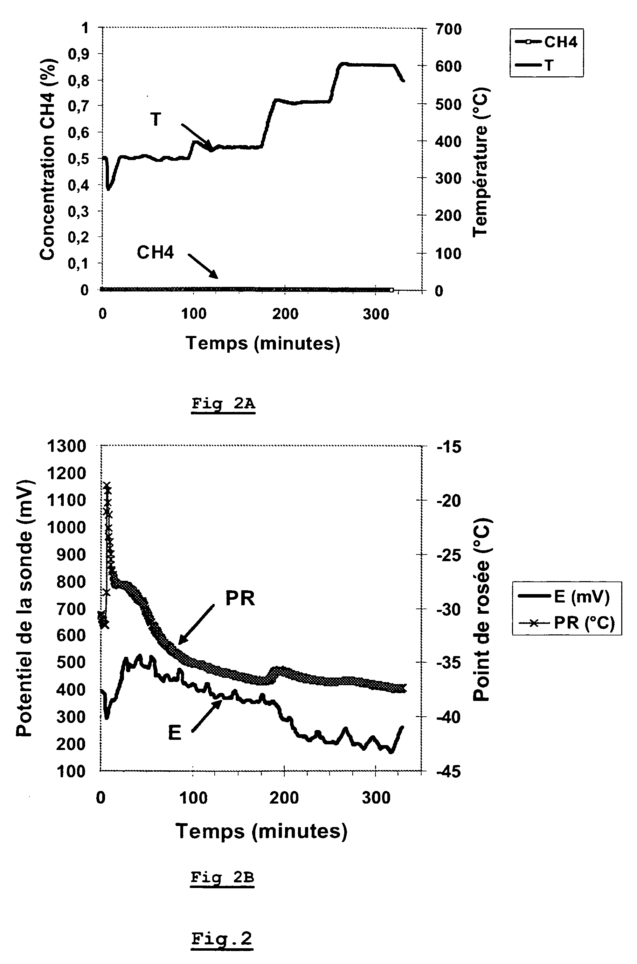

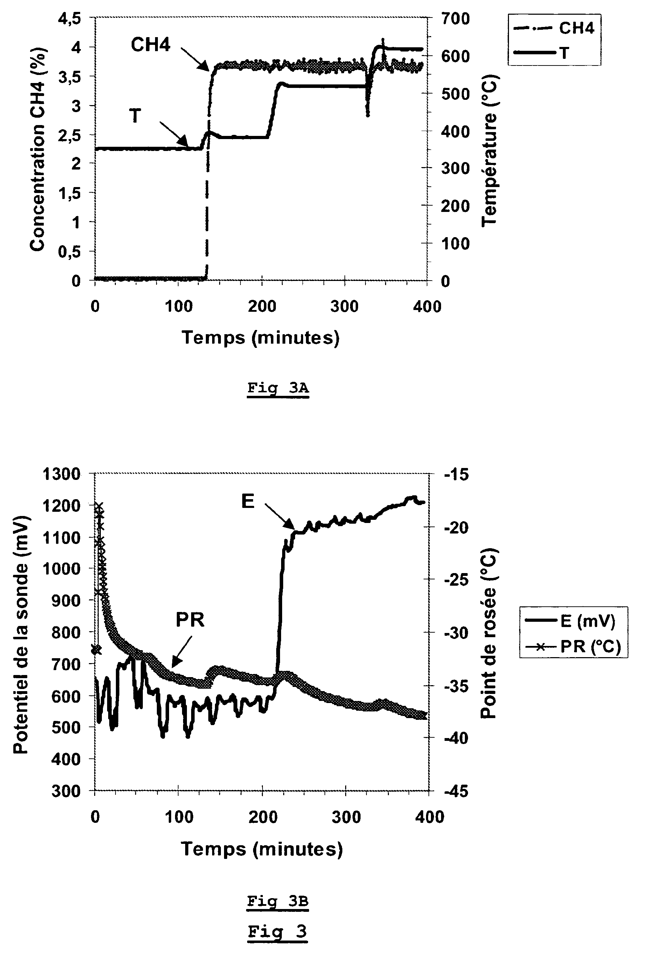

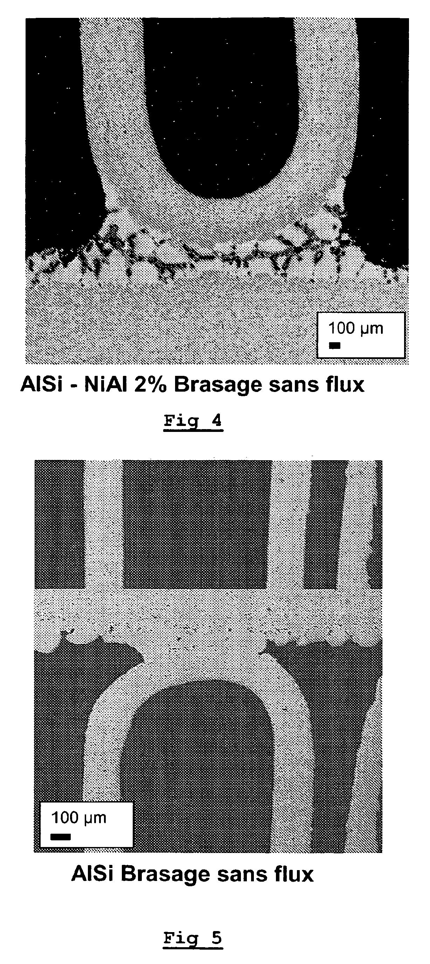

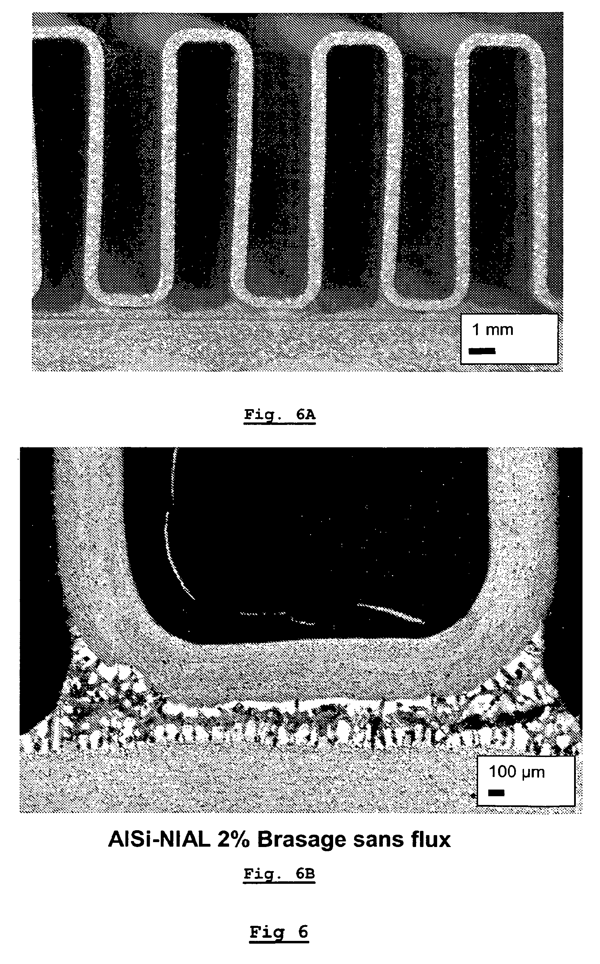

L'invention va maintenant être exposée de façon plus détaillée à l'aide d'exemples pratiques, illustrés avec les dessins annexés, parmi lesquels :
- **la** **Figure 1** est une vue en coupe d'un élément de condensateur automobile prêt à être assemblé selon le procédé conforme à l'invention ;
- **la** **Figure 2 a, b** est un graphique montrant l'évolution du potentiel de la sonde à oxygène et du point de rosée lors d'un cycle de montée en température sous atmosphère d'azote (l'axe des X est commun pour les **Figures 2a et 2b****).** A 600°C, le point de rosée atteint -36,7 °C et le potentiel de la sonde à oxygène est de 232 mV correspondant à une teneur en oxygène élevée. Ces résultats sont à comparer avec ceux obtenus sous une atmosphère d'azote additionnée de CH4 **(****Figures 3a et 3b****)**
- **la** **Figure 3 a, b** est un graphique montrant l'évolution du potentiel de la sonde à oxygène et du point de rosée lors d'un cycle de montée en température sous atmosphère d'azote additionné de 4 % en vol. de CH4 (l'axe des X est commun pour les **Figures 3a et 3b****).** A 600°C, le point de rosée atteint -38 °C et le potentiel de la sonde à oxygène 1225 mV correspondant à une teneur en oxygène inférieur à un ppm. En comparant ces résultats avec ceux obtenus sous atmosphère d'azote **(****Figures 2a et 2b****),** on constate que l'injection du CH4 permet de diminuer de manière conséquente la teneur en 02 dans l'atmosphère de brasage.
- **la** **Figure 4** est une photo grandeur nature de la surface brasée ; l'alliage d'apport utilisé est un alliage Al-Si-Ni à 2% de (Ni-Al) obtenu par mécano-synthèse brasé sans flux sous une atmosphère d'azote à bas point de rosée (-38°C) et basse teneur en oxygène. L'attention est attirée sur le bon mouillage obtenu sans apport de flux.
   L'atmosphère a été élaborée lors d'une étape préalable au brasage par injection discontinue de CH4 (1% en Vol.) dans l'enceinte du four à une température de 600°C.
- **la** **Figure 5** est une photo grandeur nature de la surface brasée ; l'alliage d'apport utilisé est un alliage de brasage conventionnel AlSi brasé sans flux sous une atmosphère d'azote à bas point de rosée (-38°C) et basse teneur en oxygène. L'attention est attirée sur la formation d'une liaison brasée sans ajout de flux.
   L'atmosphère a été élaborée lors d'une étape préalable au brasage par injection discontinu de CH4 (1% en Vol.) dans l'enceinte du four à une température de 600°C.
- **la** **Figure 6 a, b** est une photo grandeur nature de la surface brasée ; l'alliage d'apport utilisé est un alliage Al-Si-Ni à 2% de (Ni-Al) obtenu par mécano-synthèse brasé sans flux sous une atmosphère d'azote à bas point de rosée (-45) et basse teneur en oxygène (teneur en 02 < 1ppm). L'attention est attirée sur le bon mouillage obtenu sans ajout de flux.

### EXEMPLES :

Dans les exemples ci-dessous, les méthodes de mesure suivantes ont été utilisées :
**Point de rosée :** Mesures réalisées à l'aide du modèle capacitif MMY 24 (General Eastern) ; l'échelle de mesure : +20°C - 100°C.
**Pression partielle en oxygène :** Mesures réalisées à l'aide d'une sonde à oxygène de diamètre 19 mm et de longueur 560 cm.

La correspondance entre le potentiel de sonde et la pression partielle d'O2 se fait à l'aide de l'équation suivante : P(O2) = 0,2095 • 10^{(-E/0,0496T)}, où P(02) étant la pression partielle de l'oxygène exprimée en atm, E étant le potentiel mesuré par la sonde à oxygène en mV et T étant la température exprimée en degrés Kelvin.

A titre d'exemple, le Tableau 1 montre la correspondance entre la valeur du potentiel de la sonde et la teneur en oxygène mesurée dans l'atmosphère de brasage.

**Tableau 1**

| **T(°C)** | **E (mV)** | **P(O2) (atm)** | **P(O2) (Pa)** |
|---|---|---|---|
| 600 | 200 | 5,0·10⁻⁰⁶ | 5,1·10⁻⁰¹ |
| 600 | 300 | 2,5·10⁻⁰⁸ | 2.5·10⁻⁰³ |
| 600 | 400 | 1,2·10⁻¹⁰ | 1,2·10⁻⁰⁵ |
| 600 | 500 | 6,0·10⁻¹³ | 6,0·10⁻⁰⁸ |
| 600 | 600 | 2,9·10⁻¹⁵ | 3,0·10⁻¹⁰ |
| 600 | 700 | 1,4·10⁻¹⁷ | 1,5·10⁻¹² |
| 600 | 800 | 7,1·10⁻²⁰ | 7,2·10⁻¹⁵ |
| 600 | 900 | 3,5·10⁻²² | 3,5·10⁻¹⁷ |
| 600 | 1000 | 1,7·10⁻²⁴ | 1,7·10⁻¹⁹ |
| 600 | 1100 | 8,4·10⁻²⁷ | 8,5·10⁻²² |
| 600 | 1200 | 4,1·10⁻²⁹ | 4,2·10⁻²⁴ |
| 600 | 1225 | 1,1·10⁻²⁹ | 1,1·10⁻²⁴ |
| 600 | 1300 | 2,0·10⁻³¹ | 2,0·10⁻²⁶ |

### Exemple 1 : Préparation d'alliage AlSi-NiAl par mécanosynthèse

Dans un broyeur planétaire, on a broyé un mélange à 50% atomique de poudre de Al et de poudre de Ni. Le mélange NiAl est ensuite tamisé entre 63 et 125 microns avant d'être dilué à hauteur de 2% ou 5% en volume dans une poudre Al-Si à 12% en poids de silicium préalablement calibrée.

On a ainsi préparé un alliage Al-Si-NiAl à 1 % en volume de NiAl, un alliage Al-Si-NiAl à 2% en volume de NiAl et un alliage Al-Si-NiAl à 5% en volume de NiAl qui ont été utilisés dans les essais décrits ci-après.

### Exemple 2 : Préparation des éprouvettes de brasage

Les différents éléments qui composent les éprouvettes de brasage **(****Figure 1****)** ont été décapés mécaniquement au papier SiC 320 et ensuite dégraissés en phase vapeur. L'alliage d'apport 2 est ensuite déposé à la surface d'une tôle en 3003 selon les modalités décrites ci-dessous, le tout est ensuite recouvert d'une tôle ondulée 1.

### Alliage 1 :

Une poudre d'Al-Si à 12 % de silicium a été déposée à la surface du substrat. L'épaisseur déposée était ici de 150 µm.

### Alliage 2 :

Une tôle plaquée en 3003 revêtue sur ses deux faces d'un alliage Al-Si à 12 % de silicium a été déposée à la surface du substrat. L'épaisseur du plaquage utilisé était ici de 150 µm.

### Alliage 3 :

Une tôle plaquée en 3003 revêtue sur ses deux faces d'un alliage Al-Si à 12 % de silicium a ensuite été revêtue d'un dépôt de nickel puis déposée à la surface du substrat. L'épaisseur du plaquage utilisé était ici de 150 µm. Le dépôt électrolytique de nickel, d'environ 1 µm d'épaisseur a été réalisé sur la face en contact avec le feuillard ondulé.

### Alliage 4 :

Une poudre à 2% en volume de NiAl préparée selon l'exemple 1 a été pulvérisée à la surface du support. L'épaisseur déposée était ici de 150 µm.

### Alliage 5 :

Une poudre à 5% en volume de NiAl préparée selon l'exemple 1 a été déposée à la surface du support. L'épaisseur déposée était ici de 150 µm.

### Alliage 6 :

Une tôle plaquée en 3003 revêtue sur ses deux faces d'un alliage Al-Si-Mg à 12 % de silicium et 1 % de magnésium a été déposée à la surface du substrat. L'épaisseur du plaquage utilisé était ici de 150 et 200 µm.

### Alliage 7 :

Une tôle plaquée en 3003 revêtue sur ses deux faces d'un alliage Al-Si-Mg à 12 % de silicium et 1 % de magnésium a ensuite été revêtue d'un dépôt de nickel puis déposée à la surface du substrat. L'épaisseur du plaquage utilisé était ici de 150 et 200 µm. Le dépôt électrolytique de nickel, d'environ 1 µm d'épaisseur a été réalisé sur la face en contact avec le feuillard ondulé.

### Alliage 8 :

Une poudre à 1% en volume de NiAl préparée selon l'exemple 1 a été pulvérisée à la surface du support. L'épaisseur déposée était ici de 150 µm.

### Exemple 4 : Influence de l'ajout de CH₄ sur la pression partielle en O₂ lors d'un cycle de chauffage réalisé entre 350 et 620 °C.

Au cours d'un cycle de chauffage réalisé entre 350 et 620 °C sous une atmosphère d'azote (30 l/min) on a injecté de façon continue 4% de CH₄. L'atmosphère a été réalisée dans un four de traitement thermique de marque SOLO d'un volume de 150 litres.

La teneur en oxygène (représentée par le potentiel mesuré à l'aide d'une sonde à oxygène), le point de rosée, la concentration en CH₄ et la température ont été mesurés au cours du temps. Les valeurs obtenues sont représentées sur les courbes de la Figure 3a et 3b.

On observe sur cette figure qu'en présence du CH₄, à partir de 440 °C, le potentiel de la sonde à oxygène augmente (ce qui correspond à la réduction de la quantité de l'oxygène présente dans le four). A 600°C, le potentiel de la sonde à oxygène atteint 1225 mV (sous azote additionné de CH₄ - Figure 3b) et 232 mV (sous azote - Figure 2b).

Il ressort donc clairement de cet essai que la présence de CH₄ permet de faire chuter de façon stable la teneur en oxygène de l'atmosphère, et de maintenir un niveau très bas en oxygène à la température de brasage.

### Exemple 5 : Brasage dans une atmosphère d'azote où on a préalablement injecté du CH₄ avant brasage

Un brasage dans un four de traitement thermique en atmosphère où on a préalablement injecté du CH₄ (1%) a été réalisé en utilisant comme alliage d'apport les alliages 2, 4, 5, 6 et 8 tels que décrits dans l'exemple 2 ci-dessus.

L'introduction de CH₄ dans le four est réalisée avant brasage à une température de 600 °C. Ces injections d'une durée de 15 min sont pratiquées jusqu'à ce que le point de rosée se stabilise. Le four est ensuite refroidi sous azote jusqu'à 300 °C, température à laquelle sont introduits les échantillons. Un maintien en température est alors pratiqué de façon à ce que le point de rosée atteigne une température proche de -40°C. Lorsque cette valeur est atteinte le brasage est engagé. Celui-ci est alors pratiqué sous un balayage d'azote.

Les résultats obtenus sont présentés dans le Tableau 2 ci-dessous.

**Tableau 2**

| **Atmosphère N₂** avec injection préalable de CH₄ | | |
|---|---|---|
| Point rosée : - 38°C et PO₂ (1150 mV) | | |
| 0 g/m² de flux | | |
| **Alliage 2** | (Al-Si) | Congé peu fourni |
| **Alliage 4** | (AlSi-NiAL 2%) | Congé bien fourni |
| **Alliage 5** | (AlSi-NiAL 5%) | Congé bien fourni avec forte dissolution |
| **Alliage 6** | (AlSiMg) | Congé bien fourni |
| **Alliage 8** | (AlSi-NiAL 1%) | Congé médiocre |

Des photographies de brasage avec les alliages 2 et 4 et en l'absence de flux sont présentées aux figures 4 et 5.

### Exemple 5 : Brasage dans une atmosphère d'azote à bas point de rosée et faible teneur en oxygène.

Un brasage dans un four de laboratoire sous une atmosphère d'azote à bas point de rosée (-45 °C) et une faible teneur en oxygène (02 < 1 ppm) en utilisant comme alliage d'apport les alliages 4 et 6 tels que décrits dans l'exemple 2 ci-dessus. La qualité de l'atmosphère a été obtenue en utilisant de l'azote cryogénique et le brasage réalisé sans flux

Les résultats obtenus sont présenté à la figure 6 ci-après.

Les exemples présentés ci-dessus montrent que le procédé faisant l'objet de l'invention permet de braser à la pression atmosphérique et sans flux l'aluminium et ses alliages. Ceci est réalisé en associant l'utilisation d'un alliage d'apport réactif Al-Si-Ni obtenu par mécano synthèse et d'une atmosphère à basse teneur en oxygène et en vapeur d'eau. Celle-ci est par exemple obtenue en injectant de façon discontinue du CH₄ avant le cycle de brasage. Cette combinaison permet d'obtenir des liaisons brasées, ceci sans utiliser un flux de décapage.

L'utilisation d'atmosphère à bas point de rosée et basse teneur en oxygène améliore de façon significative la qualité du joint et rend possible le brasage sans flux d'alliage de brasage conventionnel contenant du Mg.

La suppression du flux est un fait très positif, étant donné que l'application d'un flux constitue un goulot d'étranglement du procédé actuel et que l'utilisation du flux induit des problèmes environnementaux (recyclage de bains, corrosion par Acide HF).

## Revendications

1. Procédé de brasage d'aluminium conduit dans un four à la pression atmosphérique en utilisant un alliage d'apport obtenu par mécano-synthèse comprenant de l'Aluminium, du Silicium, du Nickel et éventuellement du Magnésium ou d'autres éléments d'alliage tels que le Cuivre, le Zinc, l'Argent le Chrome et le Titane;
et **se caractérisant en ce que** l'on injecte dans le four une atmosphère gazeuse comprenant un gaz inerte tel l'azote gazeux et au moins un alcane inférieur, l'alcane inférieur étant introduit dans le four de façon continue ou discontinue, l'injection pouvant être réalisée soit avant le brasage soit pendant le cycle de brasage proprement dit, et par le fait que la teneur en oxygène dans le four soit inférieure à un ppm et que le point de rosée dans le four soit inférieur à -30°C, et de préférence inférieur à -40 °C et plus préférentiellement encore inférieur à -45 °C.

2. Procédé de brasage d'aluminium selon la revendication 1 **caractérisé en ce que** ledit alliage d'apport obtenu par mécano-synthèse est obtenu par un mélange NiAl dilué dans une poudre d'Al-Si ou d'Al-Si-Mg déjà synthétisée ou telle que constituée d'un mélange d'Aluminium et de Silicium, ou d'un mélange d'Aluminium, de Silicium et de Magnésium, l'alliage final contenant de 0.05 à 10 % en Volume de NiAl, de 5 à 12 % de silicium et éventuellement de 0.5 à 2 % de Mg.

3. Procédé selon l'une quelconque des revendications 1 ou 2, **caractérisé par le fait que** la température du four durant le cycle de brasage se situe dans la gamme de 420 à 620°C, et est de préférence voisine de 600°C.

4. Procédé selon l'une des revendications précédentes, **caractérisé par le fait que** l'alcane inférieur est choisi dans le groupe comprenant les alcanes en C₁-C₄ pris seuls ou en mélange, de préférence le méthane et/ou le propane, de façon davantage préférée le méthane.

5. Procédé selon l'une des revendications précédentes, **caractérisé par le fait que** l'alcane inférieur est injecté dans le four à raison de 0,01 à 10%, de préférence de 0,01 à 8% et plus préférentiellement encore de 0,01 à 2% en volume du volume total de l'atmosphère gazeuse injectée.

6. Procédé selon l'une des revendications précédentes, dans lequel le brasage est conduit en présence de 0,1 à 10g/m², de préférence de 0,1 à 5 g/m², plus préférentiellement encore de 0,1 à 3 g/m2 et de façon encore plus préférée de 0,1 à 2g/m2 d'un flux de décapage.

7. Procédé selon l'une des revendications 1 à 5, **caractérisé en ce qu'**il est conduit en absence de flux.

## Patentansprüche

1. Verfahren zum Hartlöten von Aluminium, durchgeführt unter atmosphärischem Druck in einem Ofen, unter Verwendung einer Füllstofflegierung, die durch mechanische Synthese erzeugt wird, die Aluminium, Silizium, Nickel und gegebenenfalls Magnesium oder andere Legierungselemente wie Kupfer, Zink, Silber, Chrom und Titan umfasst;
und **dadurch gekennzeichnet, dass** eine ein Inertgas wie Stickstoffgas und mindestens ein niederes Alkan umfassende Gasatmosphäre in den Ofen injiziert wird, wobei das niedere Alkan kontinuierlich oder diskontinuierlich in den Ofen eingeführt wird, das Injizieren entweder vor dem Hartlöten oder während des eigentlichen Hartlötzyklus erfolgen kann, und dass der Sauerstoffgehalt im Ofen kleiner als ein ppm ist, und dass der Taupunkt im Ofen unterhalb -30 °C, und vorzugsweise unterhalb -40 °C und noch bevorzugter unterhalb -45 °C liegt.

2. Verfahren zum Hartlöten von Aluminium nach Anspruch 1, **dadurch gekennzeichnet, dass** die besagte durch mechanische Synthese erzeugte Füllstofflegierung durch eine NiAl-Mischung erhalten wird, verdünnt in einem Pulver aus Al-Si oder aus Al-Si-Mg, das bereits synthetisiert ist oder einem Pulver, das aus einem Gemisch aus Aluminium und Silizium, oder aus einem Gemisch aus Aluminium, Silizium und Magnesium besteht, wobei die endgültige Legierung 0,05 bis 10 Vol.-% NiAl, 5 bis 12 % Silizium und gegebenenfalls 0,5 bis 2 % Mg enthält.

3. Verfahren nach einem der Ansprüche 1 oder 2, **dadurch gekennzeichnet, dass** die Ofentemperatur während des Hartlötzyklus im Bereich von 420 bis 620 °C, und vorzugsweise nahe 600 °C liegt.

4. Verfahren nach einem der vorhergehenden Ansprüche, **dadurch gekennzeichnet, dass** das niedere Alkan aus einer Gruppe ausgewählt ist, die C₁-C₄-Alkane allein genommen oder im Gemisch umfasst, vorzugsweise Methan und/oder Propan, bevorzugter Methan.

5. Verfahren nach einem der vorhergehenden Ansprüche, **dadurch gekennzeichnet, dass** das niedere Alkan in den Ofen in einer Menge von 0,01 bis 10 Vol.-%, vorzugsweise von 0,01 bis 8 Vol.-% und noch bevorzugter von 0,01 bis 2 Vol.-% des Gesamtvolumens der injizierten Gasatmosphäre injiziert wird.

6. Verfahren nach einem der vorhergehenden Ansprüche, wobei das Hartlöten in Gegenwart von 0,1 bis 10 g/m², vorzugsweise von 0,1 bis 5 g/m², bevorzugter von 0,1 bis 3 g/m² und noch bevorzugter von 0,1 bis 2 g/m² eines Beizflussmittels durchgeführt wird.

7. Verfahren nach einem der Ansprüche 1 bis 5, **dadurch gekennzeichnet, dass** es in der Abwesenheit des Flussmittels durchgeführt wird.

## Claims

1. Aluminium brazing method conducted in an atmospheric-pressure furnace by using a filler alloy obtained by mechanical synthesis comprising Aluminium, Silicon, Nickel and optionally Magnesium or other alloying elements such as Copper, Zinc, Silver Chromium and Titanium; and **characterised in that** a gaseous atmosphere is injected into the furnace comprising an inert gas such as gaseous nitrogen and at least one lower alkane, with the lower alkane being introduced into the furnace continuously or discontinuously, with the injection able to be carried out either before the brazing or during the brazing cycle itself, and by the fact that the oxygen content in the furnace is less than a few ppm, preferably less than 1 ppm and the dew point in the furnace is below -30°C, preferably below -40°C and even more preferably below -45°C.

2. Aluminium brazing method according to claim 1 **characterised in that** said filler alloy obtained by mechanical synthesis is obtained by an NiAl mixture diluted in a powder of Al-Si or of Al-Si-Mg already synthesised or such as constituted from a mixture of Aluminium and Silicon, or from a mixture of Aluminium, Silicon and Magnesium, with the final alloy containing from 0.05 to 10% by Volume of NiAl, from 5 to 12% of silicon and optionally from 0.5 to 2% of Mg.

3. Method according to any of claims 1 or 2, **characterised by** the fact that the temperature of the furnace during the brazing cycle is in the range from 420 to 620°C, and is preferably in the vicinity of 600°C.

4. Method according to one of the preceding claims, **characterised by** the fact that the lower alkane is chosen from the group comprising C₁-C₄ alkanes taken individually or in a mixture, preferably methane and/or propane, more preferably methane.

5. Method according to one of the preceding claims, **characterised by** the fact that the lower alkane is injected to the furnace at a rate of 0.01 to 10%, preferably 0.01 to 8% and even more preferably 0.01 to 2% by volume of the total volume of the injected gaseous atmosphere.

6. Method according to one of the preceding claims, wherein the brazing is conducted in the presence 0.1 to 10g/m², preferably 0.1 to 5 g/m², more preferably 0.1 to 3 g/m² and even more preferably 0.1 to 2g/m² of a stripping flow.

7. Method according to one of claims 1 to 5, **characterised in that** it is conducted in the absence of flow.
